# EUROPEAN PATENT APPLICATION

(11) **EP 4 656 284 A1**
(43) Date of publication of application: **03.12.2025**
(21) Application number: 24178538.5
(22) Date of filing: 28.05.2024
(51) Int. Cl.: B01J 19/12

(54) **PHOTOREACTOR AND METHOD OF OPERATING THE SAME**

(71) Applicant: Nederlandse Organisatie voor toegepast-natuurwetenschappelijk Onderzoek TNO, 2595 DA 's-Gravenhage (NL)
(72) Inventor: CHENG, Lun-Kai, 2595 DA 's-Gravenhage (NL); XU, Man, 2595 DA 's-Gravenhage (NL)
(74) Representative: V.O.

(57) **Abstract**

A photoreactor (1) is disclosed herein that comprises a reactor space (10), an optical power source (20), an optical sensing device (30) and a multi-core optical fiber (40) extending into the reactor space. The multi-core optical fiber has a first core (41) that is optically coupled to the optical power source and the multi-core optical fiber is configured to laterally outcouple optical radiation from the first core into the reactor space. The multi-core optical fiber has a second core (42) that is optically coupled to the optical sensing device. A cross-sectional surface of the first core is at least as large as a cross-sectional surface of the second core.

## Description

### BACKGROUND

The present invention pertains to a photoreactor.

The present invention further pertains to a method of operating a photoreactor.

Photoreactors are specialized devices that use light to initiate or to catalyze chemical reactions. Two main types of photoreactors may be discerned. Batch photoreactors, being a first type, are used for conducting reactions in a static, closed system where reactants are exposed to light until the reaction completes. Flow photoreactors are of a second type that provide for a continuous processing. Still further miniaturized devices, like microreactors and chip-based systems are known that provide for a high surface-area-to-volume ratio and a high reaction efficiency. Photoreactors that use optical fibers to supply light are a rapidly growing area within the broader field of photoreactors. Therein optical fibers facilitate a transport of light from a high power light source, such as a laser, directly into the reaction medium and provide for a more uniform distribution of light in the reactor space, therewith increasing the reactor's efficiency.

By way of example Wu et al. provides for a review of the application of optical fibers in: "Photocatalytic optical fibers for degradation of organic pollutants in wastewater: a review", Environmental Chemistry Letters (2021) 19:1335-1346. The efficiency of a chemical reaction strongly depends on the physical conditions, such as the temperature. Hence for optimizing the reaction efficiency it is important to monitor such physical conditions and if necessary to adapt settings like a light intensity or a reactant flow speed accordingly. It should however undesirable that monitoring equipment is at the cost of available reaction volume or impedes the efficiency of the photocatalytic process.

### SUMMARY

According to a first aspect of the invention an improved photoreactor is provided. According to a second aspect of the invention an improved method of operating a photoreactor is provided.

Embodiments of the improved photoreactor comprise a reactor space, an optical power source, an optical sensing device and a multi-core optical fiber extending into the reactor space. The multi-core optical fiber has a first core that is optically coupled to the optical power source and the multi-core optical fiber is configured to laterally outcouple optical radiation from the first core into the reactor space. The multi-core optical fiber also has a second core that is optically coupled to the optical sensing device and wherein a cross-sectional surface of the first core is at least as large as a cross-sectional surface of the second core.

In the improved photoreactor, the radiation detected by the optical sensing device can be used for monitoring one or more physical conditions relevant for the efficiency of the photocatalytic process. The optical sensing device can be arranged outside the reactor space and therewith does not adversely affect the processes therein. As the second core is provided as a member of the optical fiber of which the first core is used to supply the optical radiation for catalyzing the process, it can be easily integrated in the photoreactor. For example, the multi-core optical fiber may directly replace a single core optical fiber having only a first core. In practice the second core may have a cross-section smaller than that of the first core, e.g. 5 times smaller. The second core inside the multi-core optical fiber enables a monitoring of the one or more physical conditions close to the location where these processes are actually catalyzed by the optical radiation supplied via the first core. Therewith the improved photoreactor enables monitoring of physical conditions while substantially avoiding that this adversely affects the available reaction volume or the efficiency of the photocatalytic process.

In some embodiments the second core is configured for enabling distributed temperature sensing based on Raman scattering. Therewith the temperature along the optical fiber can be computed using light originating from the first core. This has the advantage that a separate light source for the second core is superfluous. For longer optical fibers the optical power at the end of the fiber would be too low however to perform Raman scattering based measurements. Accordingly, for longer optical fibers it is preferable that the optical sensing device includes a separate light source for the second core.

In some examples the first core is optimized for a distribution of high power laser radiation (e.g. of 100W or more).

The photoreactor may comprise a respective plurality of each of the elements specified herein, for example a plurality of reactor spaces, a plurality of multi-core optical fiber or a plurality of multi-core optical fibers in a single reactor space.

The photoreactor may be operated batchwise, in that the reactor space is filled with the reactants and operated until the reaction is completed. Alternatively operation may be performed in a continuous manner, wherein the reactants are continuously supplied at one or more inputs and the reaction product is obtained at an output while the reaction proceeds.

The process may involve an optically activated chemical reaction between two or more input component or may involve an optically activated chemical reaction of a single input component, for example a decomposition process of the single input component.

The second core may be provided in the multi-core optical fiber in various ways. In some embodiments the second core is arranged within the first core. For example, the second core is concentrically arranged within the first core. In other embodiments the second core and the first core are mutually separated in the multi-core fiber. That is they may be separated from each other by a cladding material. In some embodiments the multi-core optical fiber comprises additional cores, for example an additional second core for monitoring an additional physical parameter, or an additional first core that is optically coupled to an optical power source wherein the multi-core optical fiber is configured to laterally outcouple optical radiation from the additional first core into the reactor space. In such case the first core and the additional first core may be configured to provide optical power to mutually different longitudinal ranges of the multi-core optical fiber. In case more than one second core is present, these second cores may have mutually different arrangements. For example one thereof may be arranged inside a first core and the other one may be arranged outside the first core.

In some embodiments the second core is configured to monitor one or more physical parameters in that it is provided with fiber gratings. Examples thereof are Fiber Bragg Gratings (FBG), Long-Period Gratings (LPG), and Phase-Shifted Fiber Bragg Gratings (PS-FBG). The refractive index of the fiber and the grating period change with temperature. By monitoring shifts in the Bragg wavelength, precise temperature measurements can be made by the optical sensing device. LPGs have a grating period much longer than that of FBGs, which causes coupling between the core mode and cladding modes of the fiber. The transmission spectrum of an LPG features attenuation bands at wavelengths where this coupling occurs, and these bands shift in response to environmental changes. PS-FBGs are a variant of FBGs where a small phase shift is introduced in the middle of the grating, creating a narrow transmission window within the broader stop band. This window is highly sensitive to changes in the grating parameters. Different longitudinal sections of the second core may be provided with FBG's having a mutually different grating period, so that a physical parameter can be monitored independently for each of these longitudinal sections.

In some embodiments the second core has a non-circular cross-section, e.g. an elliptical cross-section. This renders it possible to determine mutually different physical parameters independently from each other. For example an FBG in an elliptical core will have two polarization modes with each a different pressure sensitivity but the same temperature sensitivity. Therewith the pressure and the temperature can be computed from the combination of measurement data obtained for both polarization modes.

In some embodiments the optical sensing device is configured to determine a time correlation of respective temperature measurements obtained from a pair of FBGs separated by a predetermined distance and to estimate the flow speed of a medium inside the reactor space based on the measured time correlation.

In some embodiments the second core has optical scattering properties for the measurement of one or more physical parameters. Changes in temperature and strain alter the density and refractive index of the fiber, respectively, which in turn affects the characteristics of the scattered light. These changes are detectable by the optical sensing device and enable it to map temperature variations along the fiber. Raman scattering in fibers involves the interaction of photons with molecular vibrations that result in the energy of the scattered photons being shifted from the input light (Stokes shift). The intensity and shift of the scattered light are dependent on the temperature of the fiber. Brillouin scattering is caused by interactions between light photons and acoustic phonons within the fiber. This interaction leads to a frequency shift (Brillouin shift) in the scattered light, which is sensitive to both temperature and strain.

The lateral outcoupling of the optical radiation from the first core into an interior of the reactor vessel space as well as the distribution of the radiation intensity along the multi-core optical fiber can be achieved in various ways.

In some embodiments of the photoreactor the first core and/or a cladding of the multi-core optical fiber is provided with scattering centers to couple optical radiation from the first core into the environment of the multi-core optical fiber inside the reactor space. The scattering properties for example result from scattering particles or from local inhomogeneities of the refractive index of the first core or of the cladding. A homogeneous distribution of the intensity of the outcoupled light along the multi-core optical fiber can be promoted by providing the scattering centers with a density that increases in a direction along the multi-core optical fiber away from the optical power source. Although the radiation intensity of the optical radiation within the first core decreases in a direction away from the optical power source, the increasing density of scattering centers provides for a more efficient outcoupling.

In some embodiments of the photoreactor the multi-core optical fiber is bent to couple optical radiation from the first core into the environment of the multi-core optical fiber inside the reactor space. With a proper selection of the refractive index nc1 of the first core, the refractive index nc2 of the second core and the refractive index ncl of the cladding it can be avoided that this affects the sensing operation of the second core. Furthermore the optical radiation in the second core maybe strongly confined even if the multi-core optical fiber is bent when the second core has a relatively small diameter as compared to that of the first core. In practice this can be easily achieved, in that only the first core has to transport a high optical power. A homogeneous distribution of the intensity of the outcoupled light along the multi-core optical fiber can be promoted by providing the multi-core optical fiber with bents having a decreased radius of curvature in a direction away from the optical power source. Although the radiation intensity of the optical radiation within the first core decreases in a direction away from the optical power source, the decreased radius of curvature provides for a more efficient outcoupling.

In some embodiments of the photoreactor a cladding of the multi-core optical fiber has outcoupling sections to couple optical radiation from the first core into the environment of the multi-core optical fiber inside the reactor space, the outcoupling sections having a refractive index at the interfacing between first core and the cladding that is lower than outside said outcoupling sections. In these embodiments a homogeneous distribution of the intensity of the outcoupled light along the multi-core optical fiber can be promoted when outcoupling sections subsequently arranged along the multi-core optical fiber in a direction away from the optical power source have a successively decreasing value of the refractive index at the interfacing between first core and the cladding. Therewith a gradually increasing outcoupling efficiency is achieved that compensates for the gradually decreasing radiation intensity of the optical radiation within the first core.

In some embodiments of the photoreactor a mirror is provided at an end of the multi-core optical fiber opposite an end thereof that is optically coupled to the optical power source for selectively reflecting optical radiation from the optical power source. This can be realized by either a mirror on the first core only or a mirror that only reflects the wavelength of light in the first core and that transmits the sensing light wavelength in the second core. Reflecting sensing light in the second core should be avoided because the reflected sensing light would interfere with the light for the measurement e.g. the reflected light by a FBG.

Some embodiments of the improved photoreactor further comprise a controller for controlling the optical power source dependent on an output of the optical sensing device. Therewith is provided a system to analyze the sensor data and a model to provide information which can be used to adapt the control settings of the light driven chemical process system in order to optimize the output of the process e.g. for efficiency purpose. In another example thereof, the output of the optical sensing device is used to control an input flow rate, and/or a ratio of input flow rates.

In some embodiments the multi-core optical fiber is routed through the interior of the reactor space, and has a plurality of fiber sections in different locations in the interior. Therewith a large reactor volume can be irradiated and sensed with a single multi-core optical fiber.

In addition, an improved method of operating a photoreactor is provided that comprises:
providing one or more reactants into a reactor space enclosed by the photoreactor;
providing optical radiation into a first core of a multi-core optical fiber extending into the reactor space and laterally outcouple optical radiation from the first core into the reactor space to facilitate a chemical reaction involving the one or more reactants;
sensing an optical signal through a second core of the multi-core optical for measurement of one or more physical parameters indicative for the operation of the photo reactor;
wherein a cross-sectional surface of the first core is at least as large and preferably about 5 times or more as large as a cross-sectional surface of the second core.

### BRIEF DESCRIPTION OF THE DRAWINGS

These and other aspects are shown in more detail with reference to the drawings. Therein:
FIG. 1, 1A, and 1B schematically exemplary embodiments of an improved photoreactor according to the first aspect;
FIG. 2A, 2B and 2C show in more detail examples of a multi-core optical fiber for use in an improved photoreactor;
FIG. 3A and 3B show aspects of an embodiment of the improved photoreactor using a multi-core optical fiber as shown in FIG. 2B;
FIG. 3C, 3D and 3E show aspects of further embodiments of the improved photoreactor using a multi-core optical fiber as shown in FIG. 2B or 2C;
FIG. 4 shows a further example of a multi-core optical fiber for use in an improved photoreactor;
FIG. 5, 5A, and 5B show still further examples of a multi-core optical fiber for use in an improved photoreactor;
FIG. 6 and FIG. 7 show to further examples of a multi-core optical fiber for use in an improved photoreactor.

### DETAILED DESCRIPTION OF EMBODIMENTS

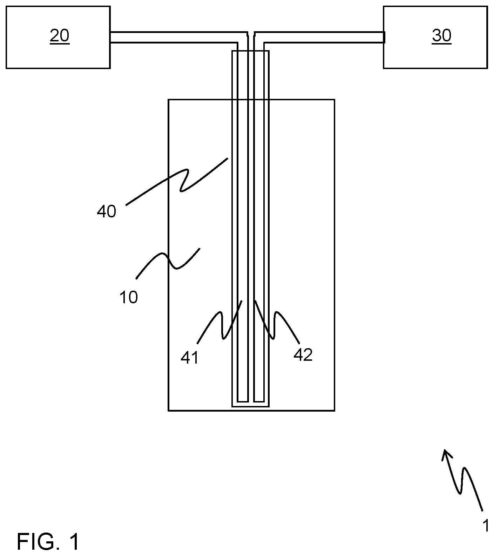

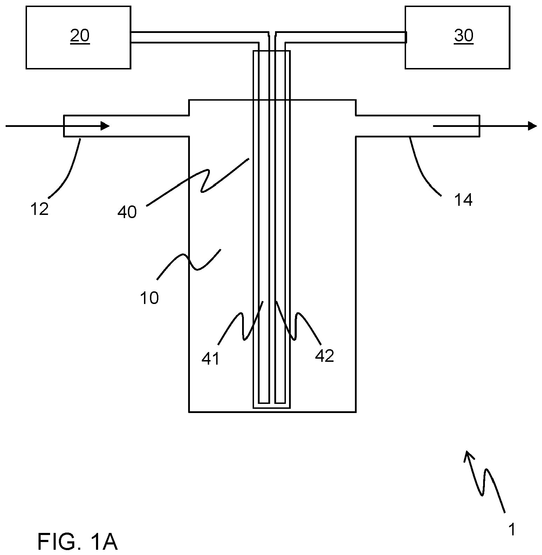

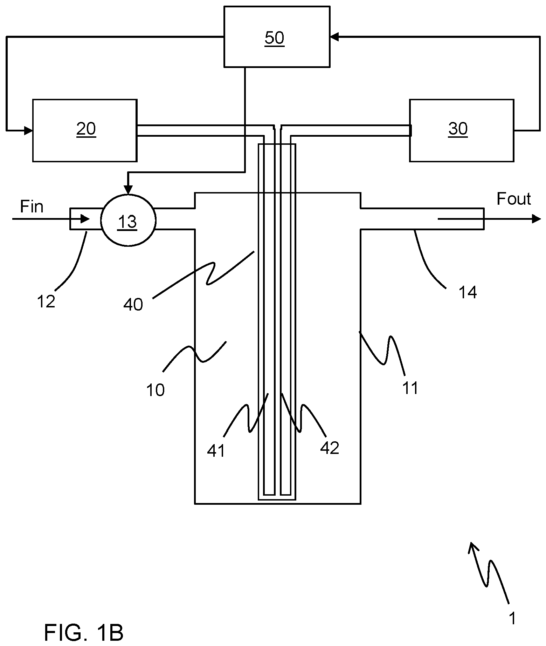

FIG. 1 schematically shows an improved photoreactor 1 according to the present invention that comprises a reactor space 10, an optical power source 20, an optical sensing device 30 and a multi-core optical fiber 40 extending into the reactor space. The multi-core optical fiber has a first core 41 that is optically coupled to the optical power source and the multi-core optical fiber is configured to laterally outcouple optical radiation from the first core into the reactor space. The multi-core optical fiber also has a second core 42 that is optically coupled to the optical sensing device. A cross-sectional surface of the first core is at least as large as a cross-sectional surface of the second core.

The reactor shown in FIG. 1 is a batch photoreactor. In use the reactor space is filled with the one or more reactants and subsequently the reactants are exposed to light until the reaction completes.

For comparison FIG. 1A shows a flow reactor, wherein the reactor space 10 is continuously refreshed by an incoming flow of the one or more reactants in one or more inputs 12 and a processed materials leave the reactor space 10 at one or more outputs 14.

In the examples of FIG. 1 and FIG. 1A, an operator may inspect an output of the optical sensing device 30 and manually control operation of the photoreactor, for example changing an intensity or wavelength of the optical power source 20 or adapt other settings.

FIG. 1B shows another example, wherein one or more settings of the photoreactor are automatically controlled by a controller 50 in response to an output of the optical sensing device 30. In the example shown, the controller 50 controls one or more settings of the optical power source 20. In addition the controller 50 controls a flow Fin with a pump 13 .

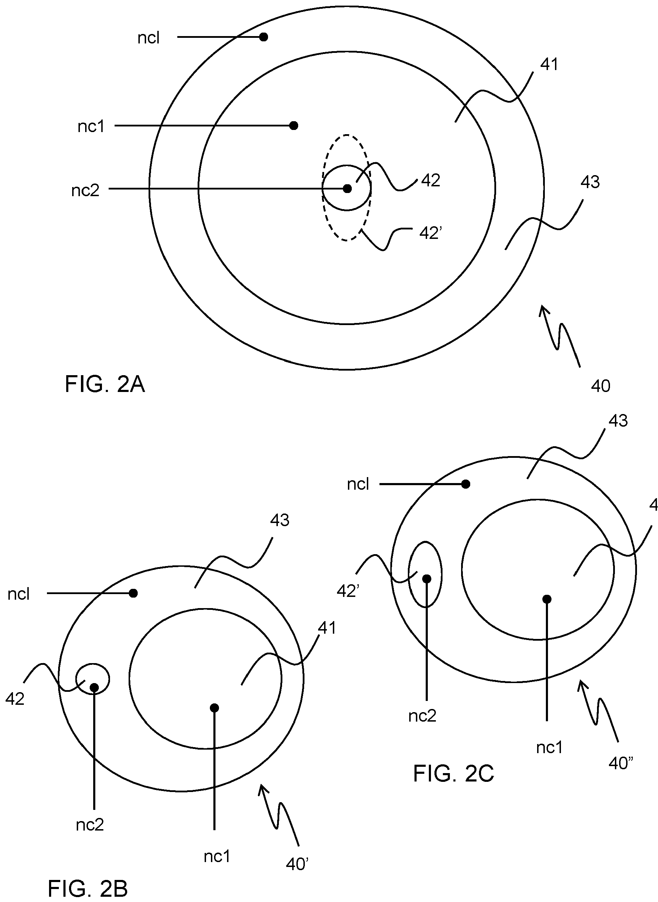

FIG. 2A shows in more detail an example of a multi-core optical fiber 40 for use in an improved photoreactor 1 . In the example shown, the second core 42 is arranged within the first core 41. The first core 41 is surrounded by a cladding 43 . The first core 41 may have a cross-sectional area that is comparable to that of the second core 42. In practice, as shown in FIG. 2A, a cross-sectional area of the first core 41 maybe larger, e.g. 5 times as large as that of the cross-sectional area of the second core 42 . Therewith the first core 41 is suitable to longitudinally distribute a large optical power over a large distance. In the example shown in FIG. 2A, the second core 42 is arranged concentrically within the first core 41. In FIG. 2A and 2B, the first core 41, the second core 42 and the cladding 43 respectively have refractive indices nc1, nc2 and ncl. In order to confine optical radiation within the second core, its refractive index should be larger than that of first core 41, i.e. nc2 > nc1. In order to confine optical radiation within the first core, its refractive index should be larger than that of the cladding 43 , i.e. nc1 > ncl. By way of example the multi-core optical fiber 40 has a first core 41 with a diameter of 105 micron and a refractive index nc1 = 1.45713 and concentrically arranged therein the second core 42 with a diameter of 9 micron and a refractive index nc2 = 1.46208, and a cladding with a refractive index ncl = 1.44344 surrounding the first core 41 , wherein the cladded product has a diameter of 125 micron.

FIG. 2B shows in more detail another example of a multi-core optical fiber 40 for use in an improved photoreactor 1. In the example shown in FIG. 2B, the second core 42 and the first core 41 are separated in the multi-core fiber 40. This is advantageous in that refractive indexes of the first core 41 and the second core 42 can be selected independent from each other. It is sufficient that the refractive index ncl of the cladding 43 is less than each of the refractive indices nc1, nc2 of the cores 41, 42. On the other hand in the example of FIG. 2A the multi-core optical fiber 40 may be provided more compact.

FIG. 2C shows an embodiment wherein the multi-core optical fiber 40" has a second core 42' with a non-circular cross-section, here an elliptical cross-section. This renders it possible to determine mutually different physical parameters independently from each other. An FBG in the elliptical core 42' will have two polarization modes with each a different pressure sensitivity but the same temperature sensitivity. Therewith the pressure and the temperature can be computed from the combination of measurement data obtained for both polarization modes. It is noted that such a second core 42' with a non-circular cross-section may alternatively be arranged in the first core 41, as indicated by the dotted contour in FIG. 2A.

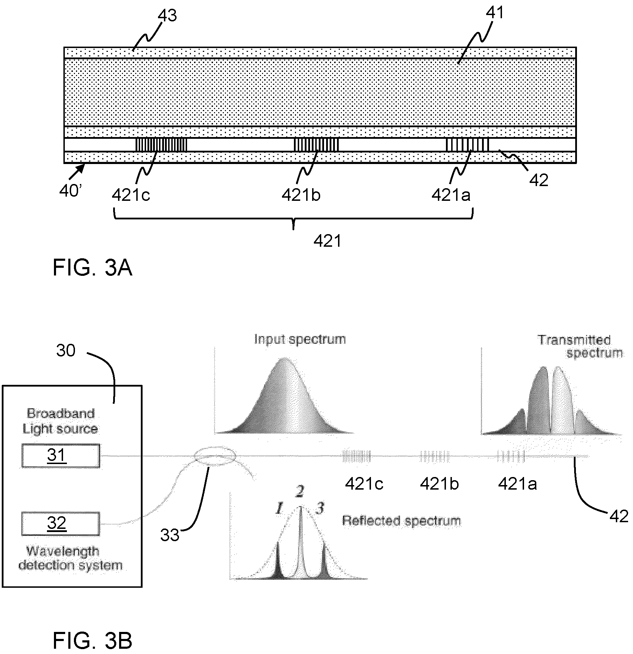

FIG. 3A and 3B show aspects of an embodiment of the photoreactor 1 using a multi-core optical fiber 40 as shown in FIG. 2B, wherein the second core 42 is provided with fiber gratings 421. Mutually different specimen 421a, 421b, 421c of the fiber gratings at mutually different longitudinal positions along the multi-core optical fiber 40 have a mutually different periods. As shown in more detail in FIG. 3B, the optical sensing device 30 comprises a broadband light source 31 and a wavelength detection system 32. The mutually different specimen 421a, 421b, 421c of the fiber gratings each reflect a portion of the broadband radiation origination from the broadband light source 31 near a proper peak wavelength corresponding to their proper period which is dependent on their proper temperature and therewith is indicative of a temperature in the reactor space near that location. In other embodiments the second core is provided with optical scattering properties e.g. Rayleigh, Raman, Brillouin, ... for the purpose of measuring one or more physical parameters such as a temperature. The optical scattering properties may result from embedded particles. Usually however the optical scattering properties result from very small inhomogeneities in the refractive index of the material.

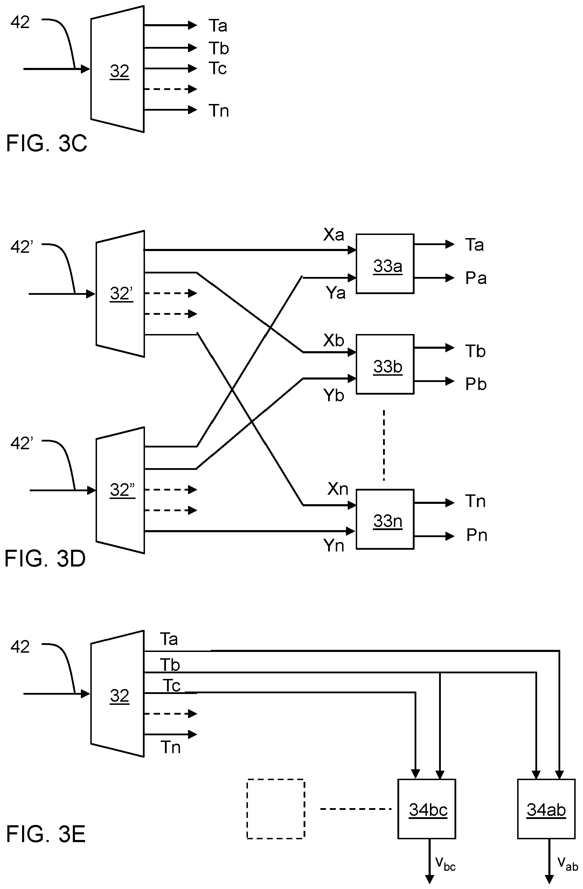

FIG. 3C schematically shows how the wavelength detection system 32 receives the reflected light and determines the temperatures Ta, Tb, Tc, ..., Tn at the positions of the specimen 421a, 421b, 421c of the fiber gratings on the basis of the shifts of their respective wavelength peaks. It is presumed that other conditions that could potentially cause a shift of the wavelength peak are controlled at a fixed value.

In some cases it may not be desired or not possible to minimize other physical conditions. For example it may be required to further estimate a local pressure. FIG. 3D illustrates an embodiment rendering possible estimation of two unconstrained physical parameters at different positions a, b, ...,n along the multi-core optical fiber 40. In this embodiment the optical sensing device 30 comprises a first and a second wavelength detection system 32', 32" that are each configured to detect the respective peak wavelength shifts for a respective one of the polarization modes of longitudinally distributed FBG's 421a, 421b, 421c, .. in an elliptical core 42'. The first wavelength detection system 32' detects the shifts Xa, Xb, ..., Xn of the peak wavelength shifts for the FBG's at positions a, b, ..., n for a first polarization mode. The second wavelength detection system 32" detects the shifts Ya, Yb, ..., Yn of the peak wavelength shifts for the FBG's at positions a, b, ..., n for a second polarization mode. Estimation units 33a, 33b, ..., 33n estimate the pressure at the locations a, b, ..., n at the longitudinal positions a, b, ...,n respectively from the pair of wavelength shifts Xa, Ya; Xb, Yb; ...; Xn,Yn. Because the two polarization modes have the same temperature sensitivity it would suffice to use only one of the set of signals e.g. the set Xa, Xb, ..., Xn or the set Ya, Yb, ..., Yn for estimating the temperature. Nevertheless a further improvement of the temperature estimation may be achieved by combining signals for the same longitudinal position from the first set and the second set. For example a more accurate estimation may be obtained by averaging the estimations for the temperature obtained from the wavelength shifts for each of the polarization directions.

FIG. 3E shows a further embodiment wherein the optical sensing device 30 comprises time correlation units 34ab, 34bc,...,The time correlation units compute a correlation in time of temperatures Ta, Tb, Tc, ..., estimated at known distances. For example the time correlation unit 34ab determines the correlation in time of the temperatures Ta, Tb estimated as a function of time for the longitudinal positions a and b respectively. Likewise, time correlation unit 34bc determines the correlation in time of the temperatures Tb, Tc estimated as a function of time for the longitudinal positions b and c respectively If a temperature of a fluid that enters the reactor space 10 is changed, the change in temperature will be measured at different points in time for different longitudinal positions, dependent on the velocity of the fluid. Therewith the time correlation units are configured to estimate the velocity of the fluid between pairs of longitudinal positions. For example time correlation unit 34ab estimates the velocity v_{ab} of the fluid between longitudinal positions a and b, and time correlation unit 34bc estimates the velocity v_{bc} of the fluid between longitudinal positions b and c.

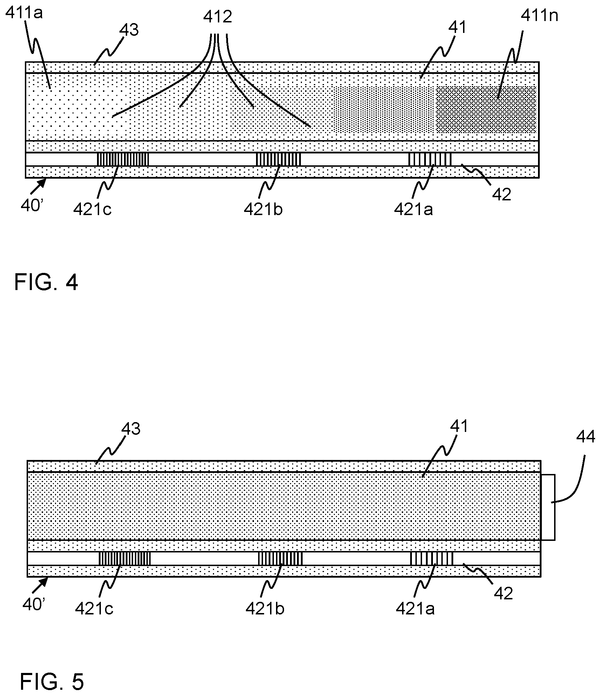

It is noted that various measurement schemes as illustrated herein may be combined. For example the temperature data Ta, Tb, ...Tn obtained with the arrangement shown n FIG. 3D may be used as input for the time correlation units of FIG. 3E to estimate the velocity of the fluid. FIG. 4 shows an example of a multi-core optical fiber 40 for use in a photoreactor wherein the first core 41 or a cladding 43 of the multi-core optical fiber 40 is provided with scattering centers to couple optical radiation from the first core 41 into the environment of the multi-core optical fiber inside the reactor space. In the example of FIG. 4, a density of the scattering centers 412 increases in a direction along the multi-core optical fiber away from the optical power source. In the example shown this is achieved in that the first core 41 has subsequent sections 411a, ..., 411n with stepwise increasing density of scattering centers 412. Alternatively, the density of scattering centers 412 may continuously in a direction along the multi-core optical fiber away from the optical power source. In both alternatives an increasing outcoupling efficiency is achieved that compensates for the gradually decreasing radiation intensity of the optical radiation within the first core. In the example shown the first core 41 or a cladding 43 of the multi-core optical fiber 40 provided with scattering centers is shown in combination with the second core 42 having with fiber gratings 421 for sensing purposes. In other examples, other or additional means for sensing physical parameters may be provided.

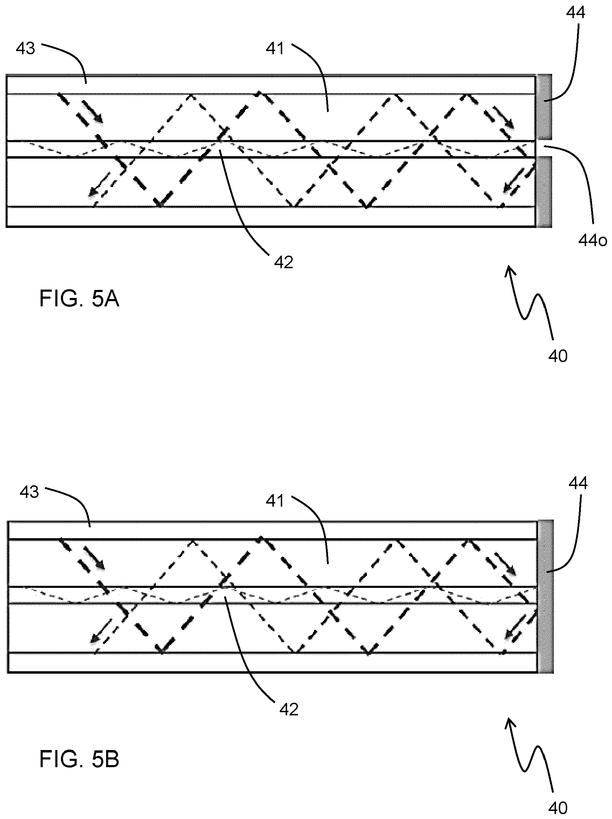

As shown in FIG. 5, a more homogenous distribution of laterally outcoupled optical radiation may already be achieved in that a mirror 44 is provided at an end of the multi-core optical fiber opposite an end thereof that is optically coupled to the optical power source for selectively reflecting optical radiation from the optical power source. FIG. 5A and FIG. 5B show two alternative examples of a multi-core optical fiber 40 having the second core 42 (concentrically) arranged within the first core 41. In the example of FIG. 5A, the mirror 44 has an opening 44o facing the second core 42 to avoid that it reflects optical radiation in the second core 42 . In the example of FIG. 5B the mirror 44 is designed to selectively reflect only optical radiation having a wavelength as supplied through the first core 41.

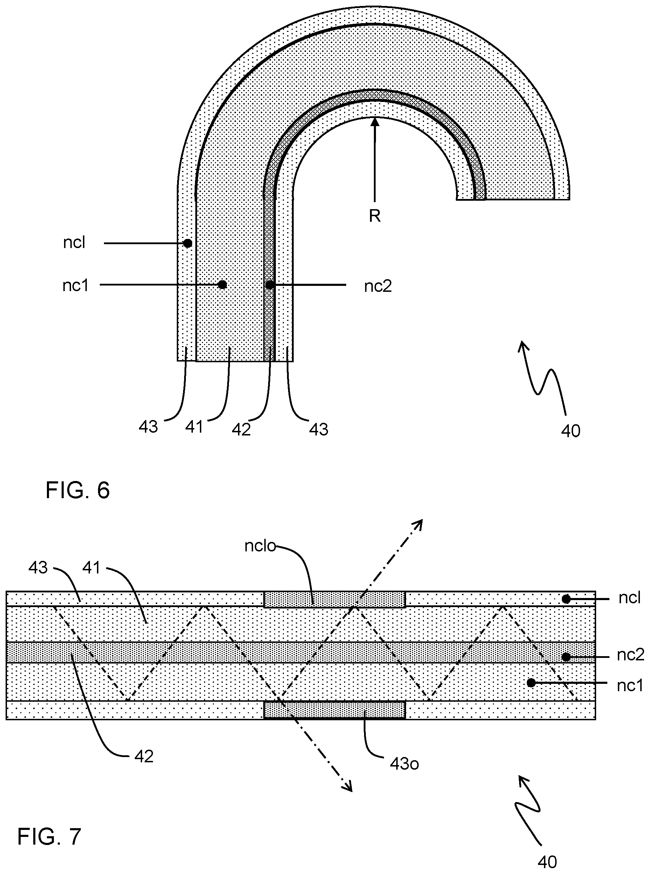

FIG. 6 shows a still further embodiment, wherein a multi-core optical fiber 40 for use in a photoreactor 1 is bent to couple optical radiation from the first core 41 into the environment of the multi-core optical fiber inside the reactor space. The first core 41 inside cladding 43, having a relatively large diameter is in multimode operation. At least for this reason higher order modes light in the first core is less tight confined than lower order modes light in the first core because in a multimode fiber, the effective refractive index of the higher order modes is smaller than that of the lower order modes. Arranging nc1 smaller than nc2 will also have the result that light in the first core is less tight confined than the light in the second core 42 at the same bending radius. The confinement in the first core 41 depends on and can be optimized by the difference between nc1 and ncl. The confinement can be relaxed by decreasing the difference between nc1. Conversely, the confinement of the second core 42 can be improved by increasing the difference between nc2 and ncl. For less confined light in the first core, bending of the optical fiber will generate light outcoupling from first core 41 while light propagating in the second core 42 is unaffected. It is an advantage of this embodiment that a same multi-core optical fiber 40 can be configured by bending for an optimal distribution in the longitudinal direction of its lateral light output by suitably. In an example the multi-core optical fiber 40 is provided with bents having a decreased radius of curvature in a direction away from the optical power source. Therewith at larger longitudinal distances from the optical radiation source a higher outcoupling efficiency is achieved that compensates for the lower radiation intensity of the optical radiation within the first core. In an example the multi-core optical fiber 40 is bent with a gradually decreasing radius of curvature in a direction away from the optical power source. Therewith the outcoupling efficiency increases in a longitudinal direction away from the optical radiation source and therewith compensates for the decreasing radiation intensity of the optical radiation within the first core.

FIG. 7 shows another embodiment, wherein a multi-core optical fiber 40 for use in a photoreactor 1 has a cladding 43 provided with outcoupling sections 43o to couple optical radiation from the first core 41 into the environment of the multi-core optical fiber inside the reactor space. The outcoupling sections 43o have a refractive index nclo that is higher than a refractive index ncl of the cladding 43 outside said outcoupling sections 43o. In some examples outcoupling sections subsequently arranged along the multi-core optical fiber in a direction away from the optical power source have a successively increasing value of the refractive index. Therewith at larger longitudinal distances from the optical radiation source a higher outcoupling efficiency is achieved that compensates for the lower radiation intensity of the optical radiation within the first core. In other examples, the cladding has a refractive index ncl that gradually increases in a direction away from the optical power source. Therewith the outcoupling efficiency increases in a longitudinal direction away from the optical radiation source and therewith compensates for the decreasing radiation intensity of the optical radiation within the first core.

In summary, the present invention pertains to an improved photoreactor 1, for example of a type shown in FIG. 1, 1A or 1B, that comprises a multi-core optical fiber 40 for example as shown in more detail in FIG. 2A, 2B, 3A, 4, 5, 5A, 5B, 6 and 7. The multi-core optical fiber 40 extends into the reactor space 10 and has at least a first core 41 and a second core 42. The first core 41 is optically coupled to an optical power source and configured to laterally outcouple optical radiation into the reactor space. The second core 42 is optically coupled to the optical sensing device for the purpose of sensing one or more physical parameters in the reactor space. A cross-sectional surface of the first core maybe at least as large as a cross-sectional surface of the second core to facilitate supply of optical radiation into the reactor space. Various measures are disclosed herein to control how the optical radiation provided by the optical power source 20 is distributed from the first core 41 into the reactor space 10 . These measures may be applied separately or in combination depending on the specific circumstances.

A method of operating a photoreactor as disclosed herein comprises steps as specified below:
(a) providing one or more reactants into the reactor space. A single reactant may be provided in case the photo catalyzed reaction serves to dissociate the reactant into components. Alternatively two or more reactants may be provided in case the photo catalyzed reaction serves to synthesize a product from the reactants. The one or more reactants may be provided batchwise as in FIG. 1 or may be provided in a continuous flow, as shown in FIG. 1A, 1B.
(b) providing optical radiation into a first core of a multi-core optical fiber extending into the reactor space and laterally outcouple optical radiation from the first core into the reactor space to facilitate a chemical reaction involving the one or more reactants. The intensity and wavelength or a wavelength range of the optical radiation may be optimally adapted to catalyze a specific reaction process. A distribution of the intensity with which optical radiation is laterally outcoupled into the reactor space 10 can be controlled by measures or a combination thereof as described with reference to FIG. 4, 5, 5A, 5B, 6 and 7.
(c) sensing an optical signal through a second core of the multi-core optical for measurement of one or more physical parameters indicative for the operation of the photo reactor. Various options are provided to measure one or more physical parameters as a function of a longitudinal position along the multi-core optical fiber 40. Physical parameters, such as the temperature, are measured for example with a FBG's as described in more detail with reference to FIG. 3A and 3B, but also other options are available for optically performing such measurements using the second core, such as by sensing scattering properties in the second core 42 or by laser interferometry.
(d) a cross-sectional surface of the first core may be at least as large and preferably about 5 times or more as large as a cross-sectional surface of the second core for distribution of high power optical radiation about longer distances.

## Claims

1. An photoreactor (1) comprising a reactor space (10), an optical power source (20), an optical sensing device (30) and a multi-core optical fiber (40) extending into the reactor space, the multi-core optical fiber having a first core (41) that is optically coupled to the optical power source, the multi-core optical fiber being configured to laterally outcouple optical radiation from the first core into the reactor space and having a second core (42) that is optically coupled to the optical sensing device and wherein a cross-sectional surface of the first core is at least as large as a cross-sectional surface of the second core.

2. The photoreactor according to claim 1, wherein the second core (42) is arranged within the first core (41).

3. The photoreactor according to claim 2, wherein the second core is concentrically arranged within the first core.

4. The photoreactor according to claim 1, wherein the second core and the first core are separated in the multi-core fiber (40).

5. The photoreactor according to any of the preceding claims wherein the second core has fiber gratings (including FBG, LPG and PS-FBG) for the measurement of one or more physical parameters.

6. The photoreactor according to any of the preceding claims wherein the second core has optical scattering properties for the measurement of one or more physical parameters.

7. The photoreactor according to any of the preceding claims wherein the first core (41) or a cladding (43) of the multi-core optical fiber (40) is provided with scattering centers to couple optical radiation from the first core (41) into the environment of the multi-core optical fiber inside the reactor space.

8. The photoreactor according to claim 7, wherein a density of the scattering features increases in a direction along the multi-core optical fiber away from the optical power source.

9. The photoreactor according to any of the preceding claims wherein the multi-core optical fiber is bent to couple optical radiation from the first core into the environment of the multi-core optical fiber inside the reactor space.

10. The photoreactor according to claim 9, wherein the multi-core optical fiber (40) is provided with bents having a decreased radius of curvature in a direction away from the optical power source.

11. The photoreactor according to any of the preceding claims wherein a cladding of the multi-core optical fiber has outcoupling sections to couple optical radiation from the first core into the environment of the multi-core optical fiber inside the reactor space, the outcoupling sections having a refractive index that is higher than a refractive index of the cladding outside said outcoupling sections.

12. The photoreactor according to claim 11, wherein outcoupling sections subsequently arranged along the multi-core optical fiber in a direction away from the optical power source have a successively increasing value of the refractive index.

13. The photoreactor according to claim 8, 10 or 12, wherein an intensity of the outcoupled light is homogeneously distributed along the multi-core optical fiber.

14. The photoreactor according to any of the preceding claims, wherein a mirror (44) is provided at an end of the multi-core optical fiber opposite an end thereof that is optically coupled to the optical power source for selectively reflecting optical radiation from the optical power source.

15. The photoreactor according to any of the preceding claims, further comprising a controller for controlling the optical power source dependent on an output of the optical sensing device.

16. The photoreactor according to any of the preceding claims, wherein the multi-core optical fiber is routed through the interior of the reactor space, and has a plurality of fiber sections in different locations in the interior.

17. A method of operating a photoreactor comprising providing optical radiation into a reactor space comprising:
providing one or more reactants into the reactor space,
providing optical radiation into a first core of a multi-core optical fiber extending into the reactor space and laterally outcouple optical radiation from the first core into the reactor space to facilitate a chemical reaction involving the one or more reactants,
sensing an optical signal through a second core of the multi-core optical for measurement of one or more physical parameters indicative for the operation of the photo reactor,
wherein a cross-sectional surface of the first core is at least as large and preferably about 5 times or more as large as a cross-sectional surface of the second core.
